# EUROPEAN PATENT SPECIFICATION

(11) **EP 2 476 737 B1**
(45) Date of publication and mention of the grant of the patent: **11.03.2015**
(21) Application number: 12150503.6
(22) Date of filing: 09.01.2012
(51) Int. Cl.: C09K 8/584, C09K 8/68, E21B 43/16, E21B 43/26

(54) **Chemomechanical treatment fluids and methods of use**
Chemomechanische Behandlungsflüssigkeiten und Verwendungsverfahren
Fluides de traitement chimiomécanique et procédés d'utilisation

(30) Priority: 13.01.2011 US 201161432495 P
(43) Date of publication of application: 18.07.2012
(73) Proprietor: ConocoPhillips Company, Houston, Texas 77079 (US)
(72) Inventor: Choens II, Robert Charles, Houston, TX 77007 (US); Ramos, Gangerico G., Bartlesville, OK 74006 (US); Montgomery, Carl T., Grove, OK 74344 (US); Johnson, Jeremy, Houston, TX 77006 (US)
(74) Representative: Simpson, Paul Christopher

(56) References cited:
- EP-A2- 0 226 097
- WO-A1-2005/121500
- US-A- 6 022 834
- US-A1- 2001 020 531
- US-A1- 2010 096 139
- US-A1- 2010 288 498

## Description

The present invention relates generally to methods for treating subterranean formations. More particularly, the present invention includes methods and systems for favorably altering the chemomechanical properties of subterranean formations with treatment fluids comprising surfactants and halide salts.

Hydrocarbons occupy pore spaces in subterranean formations such as, in sandstone and limestone formations. The pore spaces are often interconnected and have a certain permeability, which is a measure of the ability of the rock to transmit fluid flow. Maximizing production from low permeability reservoirs remains a continuing challenge in the hydrocarbon producing industry.

A variety of conventional methods have been used to improve the permeability of formations to enhance hydrocarbon recovery. Examples of such treatment methods include stimulation operations such as fracturing and acid stimulation operations.

Hydraulic fracturing is a process by which a fluid under high pressure is injected into the formation to create and/or extend fractures that penetrate into the formation. These fractures can create flow channels to improve well productivity. Propping agents of various kinds, chemical or physical, may be used to hold the fractures open and to prevent the healing of the fractures after the fracturing pressure is released. Acid stimulation, on the other hand, is a chemical stimulation method that involves the injection of acid solutions that create porous channels throughout the formation to improve the permeability and porosity of the formation.

While conventional methods are typically effective at improving the hydrocarbon producing characteristics of a formation, at least in the short term, operators continually seek to enhance reservoir productivity.

US2010/288498 describes chemomechanical treating fluids and methods for treating subterranean formations the fluid comprising: an aqueous base fluid wherein the aqueous base fluid comprises water and an alcohol, a nonamphoteric surfactant, wherein the non - amphoteric surfactant is dissolved in the aqueous base fluid at a concentration below its critical micelle concentration; and a halide salt, the method comprising injecting a fracturing fluid into a subterranean geological formation at a rate and pressure sufficient to open a fracture therein, further comprising a shut-in time after the composition is contacted with the hydrocarbon-bearing formations

WO2005/121500 discloses a method for fracturing a subterranean formation, comprising: a spot-and-hesitation squeeze, or a bullhead-and-hesitation squeeze in which a melamine-formaldehyde resin is introduced in a formation and hardens in the pores of the formation and bonds formation particles together to form a rock-plastic composite. After treatment the material properties of the geosynthetic composite are improved over the untreated geological formation. The fracture initiation pressure is increased, tensile strength increased, Young's modulus and Poisson Ratio are favorably altered to improve formation ductility, fracture toughness, and compressive strength, and the permeability is.

Therefore, treating a subterranean formation so as to alter its petrochemical properties to achieve improved production characteristics continues to evoke high interest in the industry.

According to the invention a method for treating a subterranean formation comprising:
(a) providing a chemomechanical treatment fluid comprising a base fluid, a nonamphoteric surfactant, and a halide salt, wherein the nonamphoteric surfactant is dissolved in the base fluid at a concentration below its critical micelle concentration;
(b) introducing the chemomechanical treatment fluid under a pressure of 3,447 to 34,470 kPa (500 to 5,000 psi) into the subterranean formation, the subterranean formation having a plurality of fractures, tensile strengths, compressive strengths, and a fracture toughness, wherein each fracture has one or more fracture tips;
(c) ceasing the introduction of the chemomechanical treatment fluid;
(d) allowing the chemomechanical treatment fluid to saturate the fracture tips for a period of between 15 and 120 minutes;
(e) allowing the chemomechanical treatment fluid to interact with the subterranean formation to decrease the tensile strengths, compressive strengths, and fracture toughness of the subterranean formation; and
(f) introducing additional chemomechanical treatment fluid after step (d) under a pressure of 3,447 to 34,470 kPa (500 to 5,000 psi) to bifurcate the fracture tips so as to form multiple fractures from each fracture.

A more complete understanding of the present disclosure and advantages thereof may be acquired by referring to the following description taken in conjunction with the accompanying figures, wherein:
Figure 1 compares tensile strengths of carbonate-rich rock samples soaked in various surfactants.
Figure 2 shows average tensile strengths results of the rock samples of Figure 1 for each of the surfactants.
Figure 3 compares tensile strengths of quartz-rich sandstone rock samples both dry and soaked in various surfactants.
Figure 4 shows average tensile strengths results of the rock samples of Figure 3 for each of the surfactants.
Figure 5 compares fracture toughness of carbonate-rich rock samples both dry and soaked in various surfactants.
Figure 6 compares the rock sample fracture toughness results of Figure 5 for each of the surfactants to that of dry rock.
Figure 7 compares the rock sample fracture toughness of the Eagle Ford shales under dry and wet conditions.
Figure 8 shows each of the Eagle Ford tests of Figure 7 compared to the dry sample.

Methods for treating subterranean formations comprise the steps of introducing a chemomechanical treatment fluid into the subterranean formation and allowing the chemomechanical treatment fluid to interact with the subterranean formation to alter its petrochemical properties. The chemomechanical treatment fluid comprises a base fluid, a halide salt and a nonamphoteric surfactant where the surfactant is dissolved in the base fluid at a concentration below its critical micelle concentration. Subterranean formation properties varied by the chemomechanical treatment fluid include fracture toughness and tensile strength. Other enhancements of the methods are described further below.

Reference will now be made in detail to embodiments of the invention, one or more examples of which are illustrated in the accompanying drawings. Each example is provided by way of explanation of the invention, not as a limitation of the invention. It will be apparent to those skilled in the art that various modifications and variations can be made in the present invention without departing from the scope of the invention as defined in the appended claims. For instance, features illustrated or described as part of one embodiment can be used on another embodiment to yield a still further embodiment. Thus, it is intended that the present invention cover such modifications and variations that come within the scope of the invention.

Chemomechanical treatment fluids comprise a base fluid, a halide salt, and a surfactant. The chemomechanical treatment fluid may advantageously modify certain properties of the formation, such as the fracture toughness. The concentrations of and the types of halide salts and surfactants employed in the chemomechanical treatment fluid influence the interaction of the chemomechanical treatment fluid and the formation. In certain embodiments, a plurality of halide salts and/or surfactants may be employed as desired. The specific concentrations and types of chemomechanical treatment fluids employed depend on a number of factors, including, but not limited to, formation lithology, cementation, mineralogy, virgin pore pressure, formation temperature, acidity, or pH, secondary porosity, and the presence of discontinuities (e.g. fractures, bugs, and bedding).

The surfactant comprises a nonamphoteric surfactant. In certain embodiments, a plurality of surfactants may be used.

Examples of suitable nonamphoteric and amphoteric surfactants for use with the present invention include, but are not limited to, ammonium laurel sulfate, sodium lauryl sulfate, sodium dodecyl sulfate, fluorinated surfactants, cationic fluorinated surfactants, or any combination thereof.

In certain embodiments, suitable concentrations of surfactants include concentrations from about 100 ppm to about 250 ppm. The concentration of surfactant is below its critical micelle concentration (CMC). The critical micelle concentration (CMC) is the concentration of surfactants above which micelles are spontaneously formed. Above the CMC, surfactants start aggregating into micelles, thus again decreasing the system's free energy by decreasing the contact area of hydrophobic parts of the surfactant with water. Upon reaching CMC, any further addition of surfactants will just increase the number of micelles (in the ideal case). CMC is an important characteristic of a surfactant. Before reaching the CMC, the surface tension changes strongly with the concentration of the surfactant. After reaching the CMC, the surface tension remains more constant.

The halide salt may comprise any halide salt capable of assisting the weakening of formation properties. Examples of suitable halide salts for use with the present invention include, but are limited to, chloride salts, iodide, salts, bromide salts, fluoride salts, halide salts of potassium, or any combination thereof. The addition of halide salts provides beneficial petrophysical and petrochemical interactions with the formation and may enhance the effects of the surfactants in the chemomechanical treatment fluid.

The base fluid of the chemomechanical treatment fluid may comprise any aqueous fluid. In certain embodiments, the base fluid comprises water. The water may be from any source including, but not limited to fresh water, sea water, naturally-occurring formation water, artificially-injected formation water, or any combination thereof. In certain embodiments, the base fluid may comprise an alcohol as desired.

### Various Methods of Use and Application

Useful applications of chemomechanical treatment fluids of the present invention include, but are not limited to, stimulation enhancement, enhancement of secondary operations, and enhancement of hydrocarbon recovery operations.

One example of a method for stimulation enhancement comprises treating a subterranean formation with a chemomechanical treatment fluid to enhance a stimulation operation such as a fracturing operation. In this example, the chemomechanical treatment fluid is introduced into a subterranean formation that already possesses a plurality of first fractures.

After introduction of the chemomechanical treatment fluid into the subterranean formation, the operator ceases introducing chemomechanical treatment fluid into the subterranean formation and allows the chemomechanical treatment fluid to saturate the fracture tips of the existing fractures in the subterranean formation. As mentioned previously, interaction of the chemomechanical treatment fluid with the formation causes a weakening of the formation or a reduction in the fracture toughness of the formation. During the saturation period, the surfactants of chemomechanical treatment fluids may alter the free surface energy of the crack face and reduce the work required to propagate a fracture. That is, chemomechanical treatment fluids of the present invention may change the tensile strength and fracture toughness of the rocks by altering the work needed to propagate microscopic cracks. Molecules at the surface of a grain have higher bond energy than internal molecules, so, to propagate a crack in a grain and create new surface area, work must be done to break the bonds of an internal molecule and crate higher energy bonds of surface grains. Surface acting agents such as surfactants and inorganic salts adsorb and weakly bond with the surface molecules, lowering the bond energy and reducing the work needed to propagate a crack.

During the period of saturation, pressure may be maintained in the formation or allowed to reduce, depending on the conditions of the system. In certain embodiments, the time period of saturation may vary from about 15 minutes to about half an hour to about two hours. In certain embodiments, this delay (between saturation of the fracture tips and subsequent introduction of additional chemomechanical treatment fluid) allows lagging fluids sufficient time to catch up with the tip of the propagating fractions. This process may be repeated two or more times if desired. This process may be referred to as the "hesitation" method, because some fluids are left behind the tip of the fracture and require some time for them to travel towards the moving end.

Upon sufficient saturation of the fracture tips, additional chemomechanical treatment fluid may be introduced under pressure to bifurcate the fracture tips so as to form multiple fractures from each first fracture. In certain embodiments, the saturation of the fracture tips allows the fluid to act as a "wedge" when additional chemomechanical treatment fluid is reintroduced into the formation. Thus, the cyclical introduction of the chemomechanical treatment fluid allows a wedge-splitting effect to occur so as to enhance the fracture tip birfurcations. These cyclical introductions of the chemomechanical treatment fluid may be repeated a plurality of times as desired. The subsequent reintroductions of chemomechanical treatment fluid should be sufficient to increase the pressure above the fracturing pressure. For most reservoirs, any rate of injection will be suitable if the injection rate imparts a downhole pressure that is near or above the parting pressure of the formation being treated (between about 3,447 and 34,470 kPa (500 to 5,000 psi)). In general, the fractures may extend radially at least about 10 feet from the well bore into the formation.

The stimulation enhancement methods described herein may have particular suitability in limestone formations, sandstone formations, low permeability formations, or any combination thereof. In certain embodiments, the applications described herein may have particular advantage in formations having low permeabilities of less than about 100 mD.

Another useful application of the chemomechanical treatment fluids described herein include treatment of subterranean formations in anticipation of drilling. Alternatively or additionally, treatment operations may also be performed simultaneously while drilling.

Decreasing the fracture toughness may be desired to increase the rate of penetration of drilling. In some cases, chemomechanical treatment fluids may be included as one component of a drilling mud or other completion fluid.

All or a portion of the surfactants and the halide salts may be encapsulated in a time-delay encapsulation material. Any encapsulation method known in the art may be used including, but not limited to, those encapsulating materials which degrade based on chemical or thermal conditions. In this way, chemomechanical treatment fluids may be designed to more efficiently target one or more zones of a subterranean formation. Some embodiments of chemomechanical treatment fluids may include multiple types of surfactants and/or halide salts as desired. Where multiple surfactants and/or halide salts are used, one or more of each may be coated in a time-delay release encapsulation for delayed activation or delivery of the chemical agent.

It is explicitly recognized that any of the elements and features of each of the methods described herein are capable of use with any of the other methods described herein with no limitation. Furthermore, it is explicitly recognized that the steps of the methods herein may be performed in any order except unless explicitly stated otherwise or inherently required otherwise by the particular method.

To facilitate a better understanding of the present invention, the following examples of certain embodiments are given. In no way should the following examples be read to limit, or define, the scope of the invention.

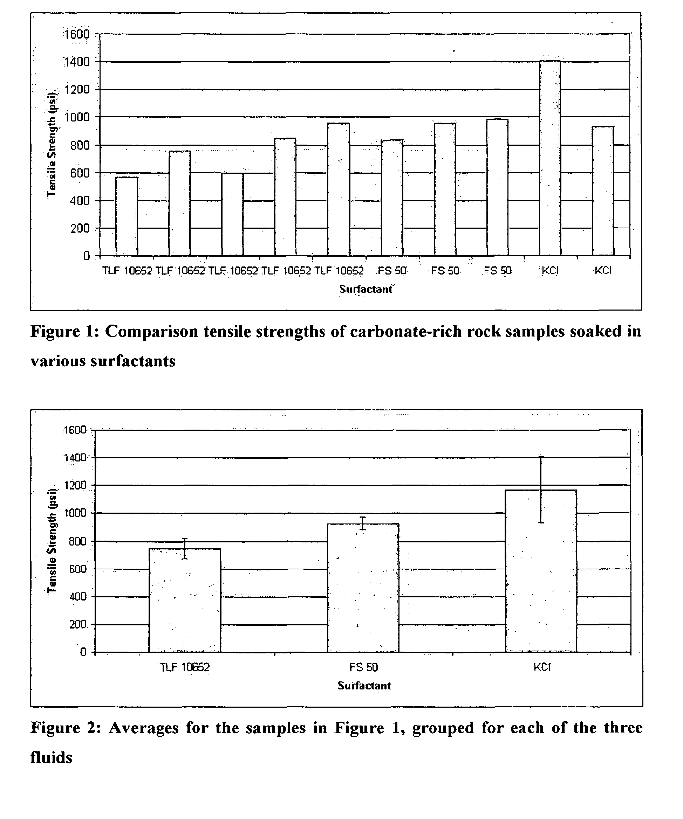

In one test, we measured the tensile strength of carbonate-rich rock samples from the Eagle Ford Reservoir, that were soaked in various chemical additives. Figure 1 compares tensile strengths of carbonate-rich rock samples soaked in various surfactants. As shown in Figure 1, the chloride-rich fluid (KCl) was not as effective as the other fluids (or surfactants).

Figure 2 shows average tensile strengths results of the rock samples of Figure 1 for each of the surfactants.

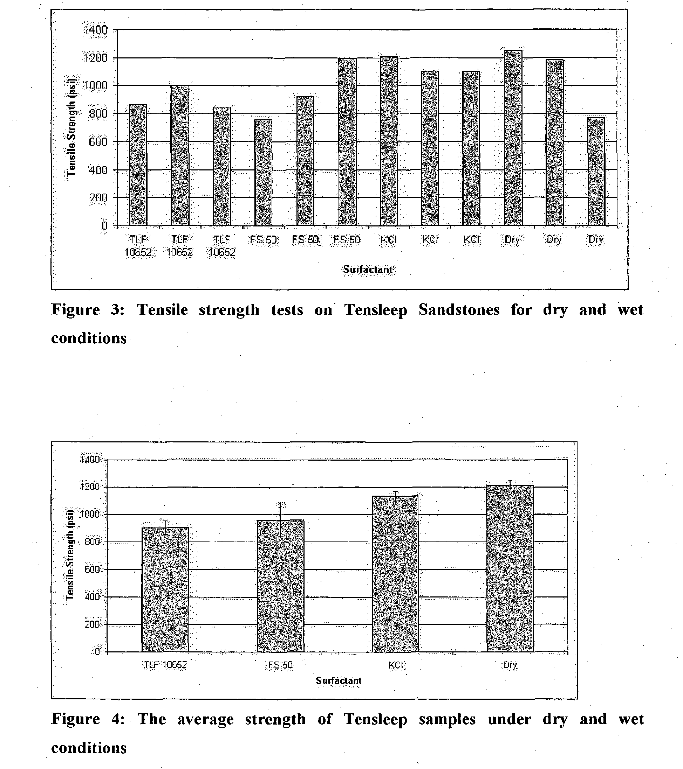

Figure 3 compares tensile strengths of quartz-rch sandstone rock samples both dry and soaked in various surfactants. Here, the same type of tensile strength was employed to test rock specimens from a quartz-rich sandstone formation called the "Tensleep" formation. Figure 3 shows the results of each specimen with no fluid (dry), and saturated with fluid such as a chloride (KCI) or surfactant (FS 50 and TLF 10652). Figure 4 shows average tensile strengths results of the rock samples of Figure 3 for each of the surfactants. The average for each fluid-group for the Tensleep tests (in Figure 3) are given in Figure 4 where the average tensile strength with the chloride fluid (KCI) is only slightly lower than the average dry strength but those with the surfactants are lower by as much as 18%.

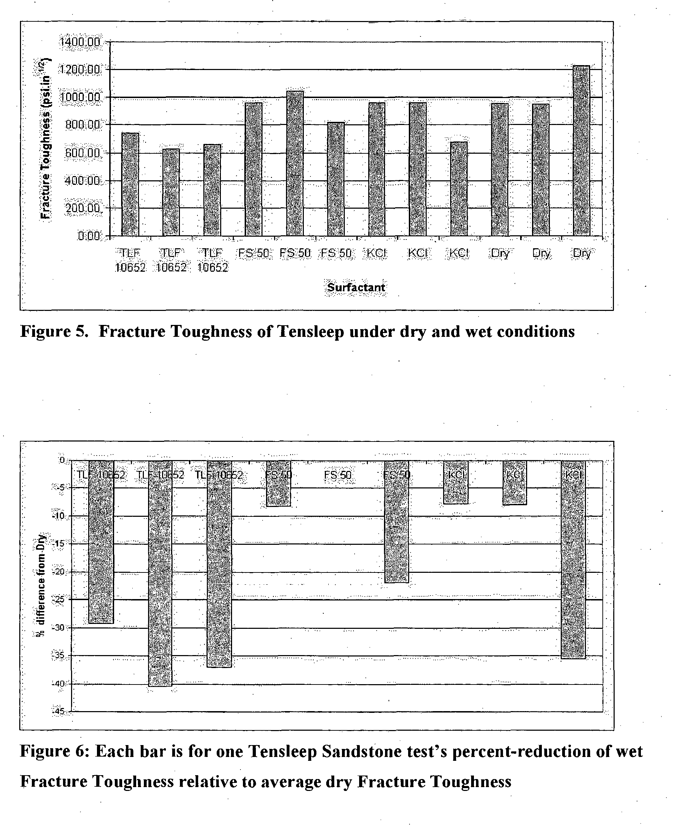

We also measured a strength called "Fracture Toughness", the resistance of a material to propagate a tensile fracture. Figure 5 shows the results for the Tensleep sandstone's fracture toughness, comparing the effects of 3 fluids and the dry rock. In this Figure, the fracture toughness of carbonate-rich rock samples is compared for both dry and soaked in various surfactants.

Figure 6 compares the rock sample fracture toughness results of Figure 5 in terms of percent-reduction of toughness relative to the average dry fracture toughness. The chloride-rich fluid and the surfactant TLF 10652 have the most weakening effect relative to dry rock.

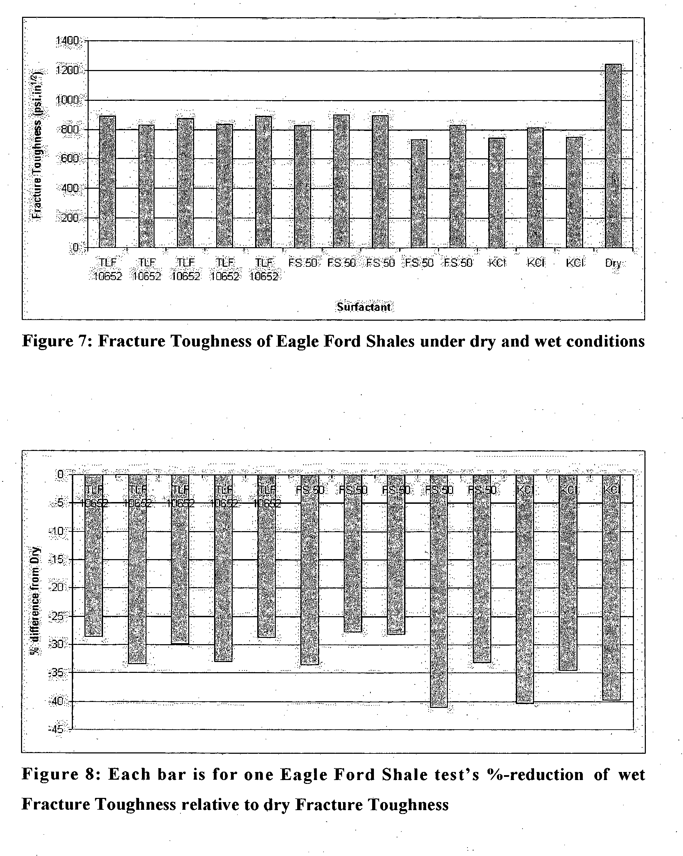

For the Eagle Ford carbonate-rich shales, the same fracture toughness experiments shown in Figure 7 for wet samples and one dry sample with dry toughness of 1,240 psi-square-root of (inch). Figure 8 shows each of the Eagle Ford tests compared to the dry sample, where fluids lower the strength, relative to the dry condition, by 27% to 41%.

## Claims

1. A method for treating a subterranean formation comprising:
(a) providing a chemomechanical treatment fluid comprising a base fluid, a nonamphoteric surfactant, and a halide salt, wherein the nonamphoteric surfactant is dissolved in the base fluid at a concentration below its critical micelle concentration;
(b) introducing the chemomechanical treatment fluid under a pressure of 3,447 to 34,470 kPa (500 to 5,000 psi) into the subterranean formation, the subterranean formation having a plurality of fractures, tensile strengths, compressive strengths, and a fracture toughness, wherein each fracture has one or more fracture tips;
(c) ceasing the introduction of the chemomechanical treatment fluid;
(d) allowing the chemomechanical treatment fluid to saturate the fracture tips for a period of between 15 and 120 minutes;
(e) allowing the chemomechanical treatment fluid to interact with the subterranean formation to decrease the tensile strengths, compressive strengths, and fracture toughness of the subterranean formation; and
(f) introducing additional chemomechanical treatment fluid after step (d) under a pressure of 3,447 to 34,470 kPa (500 to 5,000 psi) to bifurcate the fracture tips so as to form multiple fractures from each fracture.

## Patentansprüche

1. Verfahren zum Behandeln einer subterranen Formation umfassend:
(a) Bereitstellen eines chemomechanischen Behandlungsfluids umfassend ein Basisfluid, ein nichtamphoteres Tensid und ein Halidsalz, wobei das nichtamphotere Tensid im Basisfluid bei einer Konzentration unterhalb der kritischen Mizellenkonzentration gelöst ist;
(b) Einführen des chemomechanischen Behandlungsfluids bei einem Druck von 3.447 bis 34.470 kPa (500 bis 5.000 psi) in die subterrane Formation, wobei die subterrane Formation eine Vielzahl von Rissen, Zugfestigkeiten, Druckfestigkeiten und eine Bruchzähigkeit aufweist, wobei jeder Riss eine oder mehrere Rissspitzen aufweist;
(c) Unterbrechen der Einführung des chemomechanischen Behandlungsfluids;
(d) das chemomechanische Behandlungsfluid die Rissspitzen für eine Zeitspanne von 15 bis 120 Minuten sättigen lassen;
(e) das chemomechanische Behandlungsfluid mit der subterranen Formation wechselwirken lassen, um die Zugfestigkeiten, Druckfestigkeiten und die Bruchzähigkeit der subterranen Formation herabzusetzen; und
(f) Einführen von weiterem chemomechanischem Behandlungsfluid nach Schritt (d) bei einem Druck von 3.447 bis 34.470 kPa (500 bis 5.000 psi), um die Rissspitzen zu teilen, so dass sich ausgehend von jedem Riss mehrere Risse bilden.

## Revendications

1. Procédé de traitement d'une formation souterraine comprenant les étapes consistant à :
(a) fournir un fluide de traitement chimiomécanique comprenant un fluide de base, un agent tensioactif non amphotère et un sel d'halogénure, dans lequel l'agent tensioactif non amphotère est dissous dans le fluide de base en concentration inférieure à sa concentration critique de micelles ;
(b) introduire le fluide de traitement chimiomécanique sous une pression de 3447 à 34 470 kPa (500 à 5000 psi) dans la formation souterraine, la formation souterraine ayant une pluralité de fractures, de résistances à la traction, de résistances à la compression et une ténacité à la fracture, où chaque fracture présente une ou plusieurs pointes de fracture ;
(c) cesser l'introduction du fluide de traitement chimiomécanique ;
(d) permettre au fluide de traitement chimiomécanique de saturer les points de fracture pendant une période comprise entre 15 et 120 minutes ;
(e) permettre au fluide de traitement chimiomécanique d'interagir avec la formation souterraine pour réduire les résistances à la traction, les résistances à la compression et la ténacité à la fracture de la formation souterraine ; et
(f) introduire du fluide de traitement chimiomécanique supplémentaire après l'étape (d) sous une pression de 3447 à 34 470 kPa (500 à 5000 psi) pour dédoubler les points de fracture afin de former de multiples fractures à partir de chaque fracture.
